Europäisches Patentamt

(19) European Patent Office

Office européen des brevets

(11) Publication number: **0 028 047**
**B1**

(12) **EUROPEAN PATENT SPECIFICATION**

(45) Date of publication of patent specification: **30.05.84**

(21) Application number: **80200999.3**

(22) Date of filing: **22.10.80**

(51) Int. Cl.³: **H 02 B 13/02, H 01 H 31/02**

(54) **Under-load dividing switch.**

(30) Priority: **24.10.79 IT 2674379**

(43) Date of publication of application:
**06.05.81 Bulletin 81/18**

(45) Publication of the grant of the patent:
**30.05.84 Bulletin 84/22**

(84) Designated Contracting States:
**AT BE CH DE FR GB LI LU NL SE**

(56) References cited:
**DE-B-1 094 334**

(73) Proprietor: **VEI Electric Systems S.p.A.**
**Viale IV Novembre, 21**
**I-20075 Lodi Milano (IT)**

(72) Inventor: **Tosi, Giampietro**
**Via Piazza, 1**
**I-20072 Castiglione d'Adda Milano (IT)**

(74) Representative: **Faraggiana, Vittorio et al**
**Ing. Barzanò & Zanardo S.P.A. Via Borgonuovo,**
**10**
**I-20121 Milano (IT)**

Courier Press, Leamington Spa, England.

## Description

It is known that the switches commonly called "dividing switches under-load", intended for opening and closing an electric circuit connected to electric loads, have a number of requirements which can even be mutually conflicting.

More particularly, these switches can be installed within cupboards, in which a partition wall is provided which forms in the cupboard two compartments, to the first of which arrive the current-feeding conductors, generally bus bars, whereas in the second compartment the under-load dividing switches are mounted.

It is specified by the safety standards that an operator be not allowed to have in its reach, even accidentally, the live conductors of the first compartment from the second of said compartments. Inasmuch as those conductors are electrically connected to the fixed contact of the dividing switch, in order to prevent the fixed contact from being a live element in the second compartment even when the dividing switch is open, it has often been suggested to insert between the bus bars and the dividing switch another dividing switch, adapted to cut the connection between the bus bars and the main dividing switch under-load before that the second compartment is opened.

It is apparent that this expedient involves a supplementary expense, on considering that every under-load dividing switch must be equipped with its no-load auxiliary dividing switch.

This invention thus is proposing a solution of this problem that is, a dividing switch structure which is adapted to provide the segregation of the live parts in the open position of the dividing switch without requiring any auxiliary no-load dividing switch.

In addition, an object of the invention is to provide such an under-load dividing switch which can be installed with considerable ease both on a switchboard and on a wall without any tampering with the complete assembly of the apparatus and all the component parts thereof as it comes from the workshop.

This fact may ensure, as it is apparent, that the eletrical and mechanical features of the dividing switch are in no wise altered during progress of the installation.

The DE—B—10 94 334 discloses a no-load dividing switch wherein a movable contact slides in a ring under the control of a rod for engagement with a fixed contact which is mounted in and on the base of an insulating cup.

In order that the previously identified objects, together with others to be more detailedly dealt with hereinafter, the invention proposes to provide an under-load dividing switch comprising a frame on which a fixed contact is supported together with a column in which a contact is slidable which can be shifted from a closed position wherein it engages the fixed contact, and an open position in which it is withdrawn from said fixed contact, said fixed contact is mounted in the interior and on the base of a cup of a dielectric material supported by said frame, and in correspondence with the base of said cup there can slide transversally a shutter movable between a position in which it closes the cup mouth when the switch is open and the movable contact is retracted, and a position in which it opens said mouth of the cup (19) to permit passage of the movable contact, characterized in that it is an under-load dividing switch and the movement of said shutter is independent of the opening and closing movement of the said movable contact, and in that the movement of said shutter takes place together with that of an earthing contact.

In order that the essential advantages and features of a dividing switch made according to this invention may be better understood, an exemplary embodiment thereof will be described hereinafter, the description being aided by the accompanying drawings, wherein:

Figure 1 is a perspective view of a few switches according to this invention,

Figure 2 is a side elevational view, partly in cross-section, of an individual switch,

Figure 3 is an alternative embodiment of the switch of Figure 2, and

Figure 4 is a showing of a number of switches according to Figure 2 assembled within a cupboard.

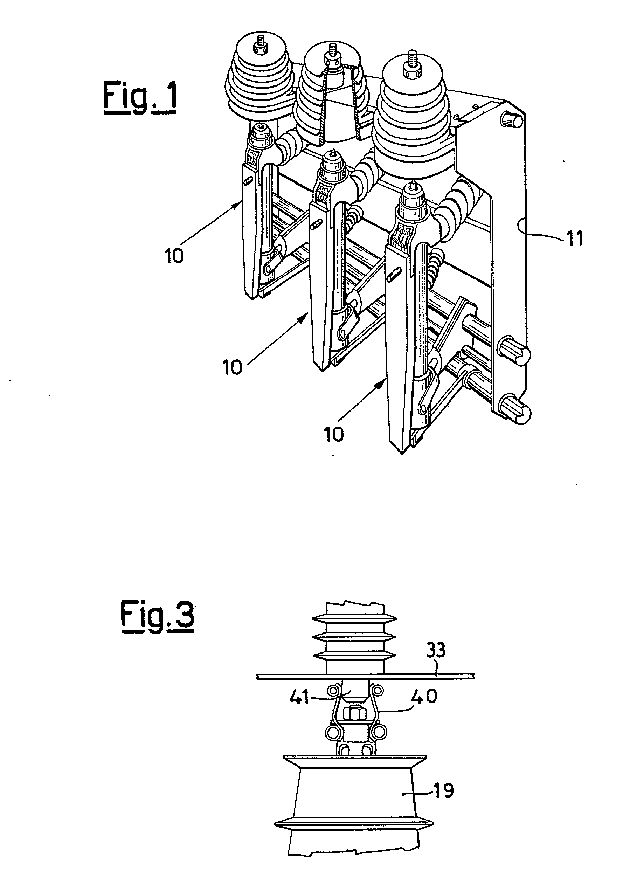

One or more dividing switches, generally indicated at 10, are mounted on a frame indicated at 11, for example of sheet metal, as shown in Figure 1.

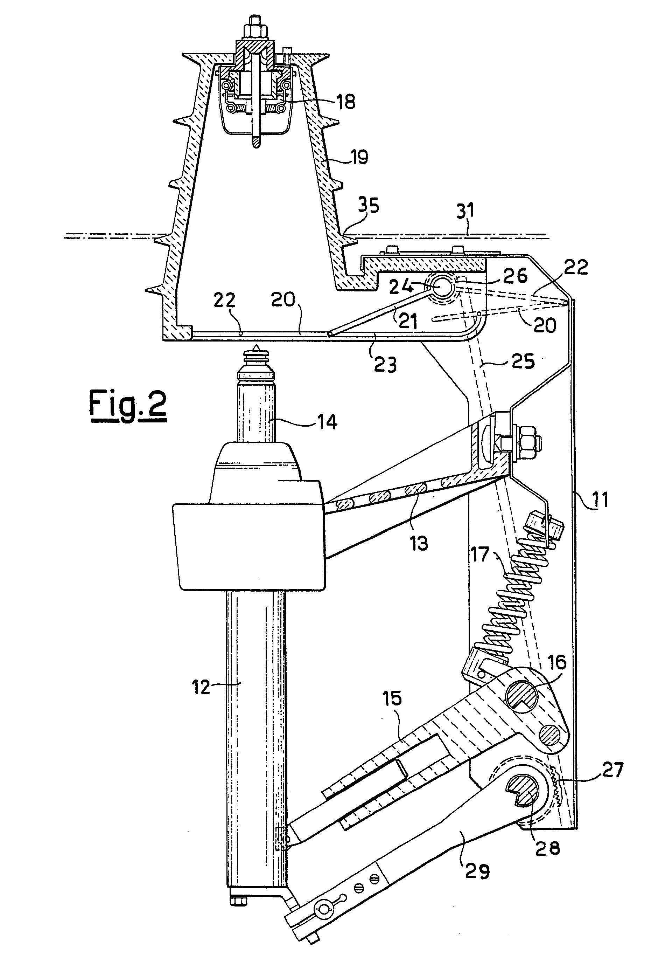

Each dividing switch, as best shown in Fig. 2 provides for fastening to the frame 11 a column 12 by means of an insulating arm 13. Within the column 12 is slidably mounted the member 14 which is the movable contact of the dividing switch and is telescopically linked to a connecting rod 15 moved by a shaft 16. A compression spring 17 which overtakes the dead centre stably holds the movable contact 14 in the position of open switch (as shown in the drawing) or in the closed switch position, respectively, when the contact 14 is thrust against the fixed contact 18 mounted in the interior of the cup 19 made of an insulating material and fastened to the frame 11.

A characteristic and essential component part of the dividing switch according to this invention is the structure connected to the fixed contact: more particularly, it is essential that the fixed contact be borne by the dielectric cup 19, which provides in its interior a recess which can be closed by a two-section shutter, composed by two sections, 20 and 21, which are mutually interlinked. The portion 20' carries the two lateral projections 22 which slide into guideways 23 of the rectangular base of the cup 19 and the portion 21 linked at 24 to the frame. A clevis 25 engages in a rack and pinion connection way at 26 with the shaft 24 and likewise at 27 engages the shaft 28 of the earthing contact 29. It is thus obvious that the closure of the earthing contact 29, that is the position taken by the shutter as depicted in Figure 2 in solid lines, causes the interior of the cup 19 to become completely closed so that the fixed contact 18 is inaccessible, according to the object of the invention.

The movable contact 14, as well as the earthing contact 29 and their component and ancillary parts are well known and may take any of the conventional configurations as adopted in the art; for this reason, no detailed description thereof will be given.

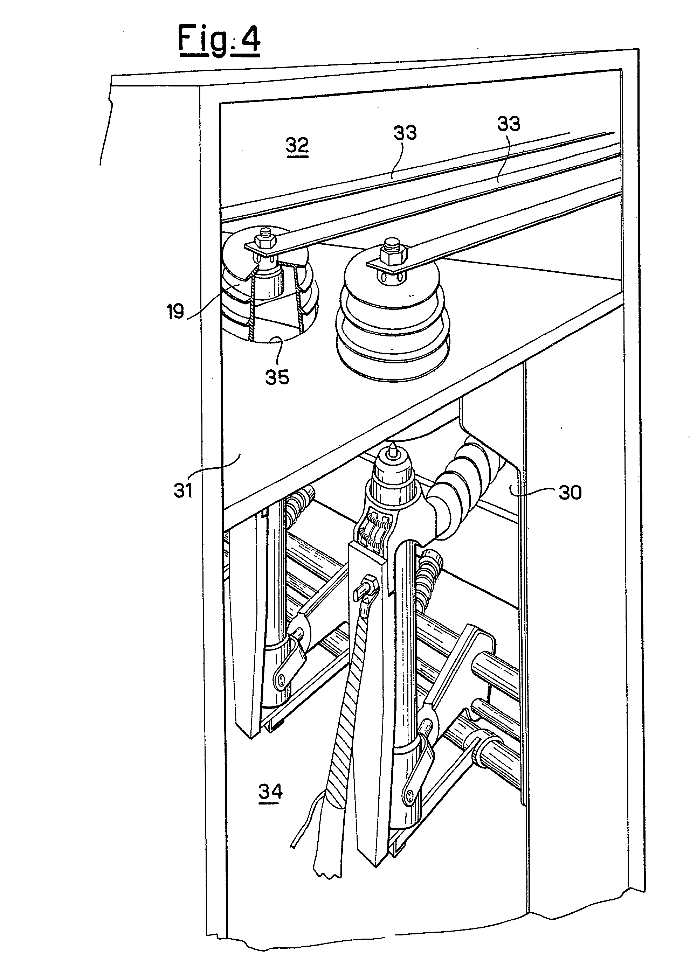

The insertion of the dieletric cup between the fixed contact and the frame permits that a satisfactory exclusion of the live members be obtained when mounting the switch in cupboard assemblies, such as depicted more detailedly in Figure 4.

The required number of dividing switches according to the invention can be mounted on the back wall 30 of a cupboard, which is partitioned by a partition wall 31 into an upper chamber 32 where the bus bars 33 arrive and a second chamber 34 wherein the dividing switches are housed.

Through the partition wall 31 circular passageways 35 are formed, through which the cups 19 of the respective switches are installed. The gills of each cup 19 sweep the edges of the bore 35 so as to define a passageway which is narrow enough to respect the requirements of safety.

It is thus apparent that when the dividing switches are open and the shutters 20 close the mouth of the cup 19, there is a substantial continuity of the partition wall 31, that is to say that the live parts cannot be accessed to from the lower chamber 34, according to the objects of the invention.

Anyone skilled in the art can appreciate that such a result is obtained by using a dividing switch which is installed in the work place complete of all its component parts and thus without altering the characteristic features of the switch as it comes from the factory.

If it is desired to be enabled to overhaul the switch very easily and conveniently, a releasable connection can be provided between the bus bars and the fixed contact, as shown in Figure 3. In this case, the fixed contact 18 carries an end clip 40 capable of pressurally seizing a terminal 41 which receives the current from its attendant bus bar.

With this kind of connection anyone skilled in the art can also provide, apparently, so that the dividing switch 10 is mounted with the insertion of vertical sliding ways on the back wall 30 of the cupboard so as to be capable of controllably performing a short downward stroke for slipping the cup 19 out of the bore 35 so that the dividing switch 10 can be subsequently withdrawn from the cupboard front and it can more conveniently be repaired or completely replaced even with live bus bars.

The dividing switch can be also mounted on a wall without requiring any adaptations.

Appropriate modifications can be introduced in the dividing switch in order to fulfil quite particular service requirements.

More particularly, it is recalled that the parts which are essential to achieve the purposes of the invention substantially require the particular structure of the fixed contact, carried in the interior of the insulating cup susceptible of being masked by a shutter.

The configuration of the component parts described herein can be modified without departing from the scope of this invention.

## Claim

A dividing switch (10) comprising a frame (11) on which there is supported a fixed contact (18), a column (12) in which slides controllably a contact (14) movable between a closed position in which it engages the fixed contact (18) and an open position in which it is withdrawn from said fixed contact (18), said fixed contact (18) is mounted in the interior and on the base of a cup (19) of a dielectric material supported by said frame (11), and in correspondence with the base of said cup there can slide transversally a shutter (20,21) movable between a position in which it closes the cup mouth when the switch is open and the movable contact (14) is retracted, and a position in which it opens said mouth of the cup (19) to permit passage of the movable contact (14), characterized in that it is an under-load dividing switch and the movement of said shutter (20,21) is independent of the opening and closing movement of the said movable contact (14), and in that the movement of said shutter (20,21) takes place together with that of an earthing contact (29).

## Patentanspruch

Ein Unterbrecherschalter (10) umfassend einen Rahmen (11), in dem ein fester Kontakt (18) sowie eine Saeule (12) gelagert sind, in der ein Kontakt (14) steuerbar verschiebbar ist, der zwischen einer geschlossenen Stellung in welcher er mit dem festen Kontakt (18) in Eingriff steht und einer offenen Stellung in der er vom besagten festen Kontakt (18) entfernt ist bewegbar ist, wobei der besagte feste Kontakt (18) innerhalb und auf der Grundflaeche einer seitens des besagten Rahmens (11) gelagerten Schale (18) aus dielektrischem Werkstoff angebracht ist und auf der Grundflaeche der besagten Schale eine Verschlussplatte (20,21) quer verschiebbar ist, die zwischen einer Lage, in der sie die Oeffnung der Schale verschliesst wenn der Schalter offen und der bewegliche Kontakt (14) zurueckgezogen ist, und einer Lage, in der sie die Oeffnung der Schale (19) frei gibt und den Durchgang des beweglichen Kontaktes (14) gestattet, beweglich ist, dadurch gekennzeichnet, dass es sich um einen unter Last unterbrechenden Schalter handelt und dass die Bewegung der besagten Verschlussplate (20,21) unabhaengig von der Oeffnungs und Schliessbewegung des besagten beweglichen Kontaktes (14) ist sowie dass die Bewegung der besagten Versclussplatte (20,21) zusammen mit jener eines Erdungskontaktes (29) stattfindet.

**Revendication**

Un sectionneur (10) comprenant châssis sur lequel èst supporté un contact fixe (18) une colonne (12) dans laquelle glisse commandé un contact (14) mobile entre une position de fermeture dans laquelle est engagé le contact fixe (18) et une position d'ouverture dans laquelle il est éloigné de ce contact fixe (18), ce contact fixe (18) étant monté à l'intérieur et sur las base d'une cloche (19) en matériel diélectrique supportée par ce châssis (11), et en correspondance avec la base de cette cloche une cloison (20, 21) peut glisser transversalement avec un mouvement entre une position dans laquelle elle ferme la bouche de la cloche lorsque le sectionneur est ouvert et le contact mobile (14) est retiré, et une position dans laquelle elle ouvre la bouche de la cloche (19) pour permettre le passage du contact mobile (14) caractérisé par le fait que le sectionneur est un sectionneur souscharge et que le mouvement de cette cloison 620,21) est indépendant de mouvement d'ouverture et de fermeture de ce contact mobile (14) et par le fait que le mouvement de cette cloison (20,21) a lieu avec le mouvement d'un contact de terre.

Fig. 1

10

10

10

11

Fig. 3

33

41

40

19

Fig.2

# Fig:4